(19) Europäisches Patentamt
European Patent Office
Office européen des brevets

(11) EP 2 654 954 B1

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(21) Anmeldenummer: **11805462.6**

(22) Anmeldetag: **15.12.2011**

(51) Int Cl.:
***B01J 31/22*** *(2006.01)* ***B01J 31/16*** *(2006.01)*

(86) Internationale Anmeldenummer:
**PCT/EP2011/072860**

(87) Internationale Veröffentlichungsnummer:
**WO 2012/084673 (28.06.2012 Gazette 2012/26)**

(54) **VERWENDUNG VON GETRÄGERTEN RUTHENIUM-CARBEN-KOMPLEXEN IN KONTINUIERLICH BETRIEBENEN REAKTOREN**

USE OF SUPPORTED RUTHENIUM CARBENE COMPLEXES IN CONTINUOUS OPERATED REACTORS

UTILISATION DES COMPLEXES CARBENES DE RUTHENIUM SUPPORTES DANS REACTEURS OPARES CONTINUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2010 EP 10196493**

(43) Veröffentlichungstag der Anmeldung:
**30.10.2013 Patentblatt 2013/44**

(73) Patentinhaber: **BASF SE**
**67056 Ludwigshafen am Rhein (DE)**

(72) Erfinder:
- **DEHN, Richard**
  **67061 Ludwigshafen (DE)**
- **DEUERLEIN, Stephan**
  **67061 Ludwigshafen (DE)**
- **DANZ, Manuel**
  **68723 Plankstadt (DE)**
- **LIMBACH, Michael**
  **67551 Worms (DE)**
- **TELES, Joaquim Henrique**
  **67165 Waldsee (DE)**

(74) Vertreter: **BASF IP Association**
**BASF SE**
**G-FLP-C006**
**67056 Ludwigshafen (DE)**

(56) Entgegenhaltungen:
**WO-A1-2007/065907**

- **JACOBS ET AL: "Silica immobilized second generation Hoveyda-Grubbs: A convenient, recyclable and storageable heterogeneous solid catalyst", ADV. SYN. CAT, Bd. 350, 13. August 2008 (2008-08-13), Seiten 1949-1953, XP002669045, in der Anmeldung erwähnt**
- **TRONG ON D ET AL: "Perspectives in catalytic applications of mesostructured materials", APPLIED CATALYSIS A: GENERAL, ELSEVIER SCIENCE, AMSTERDAM, NL, Bd. 253, Nr. 2, 28. Oktober 2003 (2003-10-28), Seiten 545-602, XP004467628, ISSN: 0926-860X, DOI: 10.1016/S0926-860X(03)00195-9**
- **NIINISTÖ: "Determination of the hydroxy group content in silica by thermogravimetry and a comparison with 1H MAS NMR results", THERMOCHIMICA ACTA, Bd. 379, 1. Januar 2001 (2001-01-01), Seiten 201-212, XP002669046,**
- **MROWIEC-BIALON ET AL: "Determination of hydroxyls density in the silica-mesostructured cellular foams by thermogravimetry", THERMOCHIMICA ACTA, ELSEVIER SCIENCE PUBLISHERS, AMSTERDAM, NL, Bd. 443, Nr. 1, 1. April 2006 (2006-04-01) , Seiten 49-52, XP025005541, ISSN: 0040-6031, DOI: 10.1016/J.TCA.2005.12.014 [gefunden am 2006-04-01]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Cycloalkadienen aus Cycloalkenmonomeren, Polycycloalkenylenen oder Gemischen aus beiden in Gegenwart eines auf Siliziumdioxid geträgerten Ruthenium-Carben-Komplexes in einem kontinuierlich betriebenen Reaktor sowie die Verwendung entsprechender Trägerkatalysatoren in kontinuierlich betriebenen Reaktoren.

Die Bedeutung von Metallcarben-Komplexen in der organischen Synthesechemie, insbesondere in der Olefin-Metathese, wurde durch die Verleihung des Nobelpreises für Chemie im Jahr 2005 an Y.Chauvin, R. R. Schrock und R. H. Grubbs hervorgehoben.

Die von Grubbs entwickelten Ruthenium-Carben-Komplexe erwiesen sich im Vergleich zu den von Schrock entwickelten Molybdän-Carben-Komplexen als wesentlich weniger empfindlich gegenüber Sauerstoff und Wasser, so dass die Ruthenium-Carben-Komplexe derzeit intensiv in den Forschungslaboratorien an Universitäten und in der Industrie untersucht werden. Das wichtigste Anwendungsgebiet der Ruthenium-Carben-Komplexe stellt derzeit die Olefin-Metathese dar.

Mit Hilfe der Olefin-Metathese lassen sich durch Reaktion von zwei C-C-Doppelbindungen miteinander zwei neue C-C-Doppelbindungen knüpfen. Dieser Reaktionstyp kann sowohl großtechnisch, wie beispielsweise im sogenannten Shell-Higher-Olefin-Prozess (SHOP-Prozess), als auch im Bereich der Feinchemie, beispielsweise bei der Synthese von Zwischenprodukten für die Herstellung von Aromachemikalien und Duftstoffen eingesetzt werden.

In EP 1 288 181 wird ein Herstellverfahren von Cycloalkadienen in einer Metathesereaktion offenbart, wobei Trägerkatalysatoren auf Basis von $Re_2O_7$ / gamma-$Al_2O_3$ verwendet werden. Die gewonnenen Cycloalkadiene dienen als Zwischenprodukte zur Herstellung von Riechstoffen. Nachteilig sind die aufwendige Katalysatorherstellung, Verkokungsprobleme, schnelle Katalysatordeaktivierung und die sehr aufwendige Katalysatorregenerierung.

In US 6,921,735 werden zurückgewinnbare Ruthenium-Carben-Komplexe vorgestellt. Es wird unter anderem auch die Synthese eines Ligandsystems gezeigt, welches über eine -$SiMe_2$-Cl Einheit verfügt, die wiederum mit einer Silanolgruppe einer Kieselgeloberfläche reagieren kann, so dass letztendlich die Synthese von Ruthenium-Carben-Komplexen möglich wird, die über einen ihrer Liganden kovalent mit der Oberfläche eines Kieselgels verbunden sind.

Sels et al. beschreiben in Adv. Synth. Catal. 2008, 350, 1949 - 1953 ein einfaches Verfahren zur Immobilisierung von Ruthenium-Carben-Komplexen auf Kieselgelen und die Verwendung der geträgerten Katalysatoren in verschiedenen Olefin-Metathesereaktionen.

Die WO 2007 065907 A1 beschreibt einen geträgerten Übergangsmetallkomplex K, der auf einem Kieselgelträger aufgebracht ist, welcher Strukturelemente der Formel II enthält.

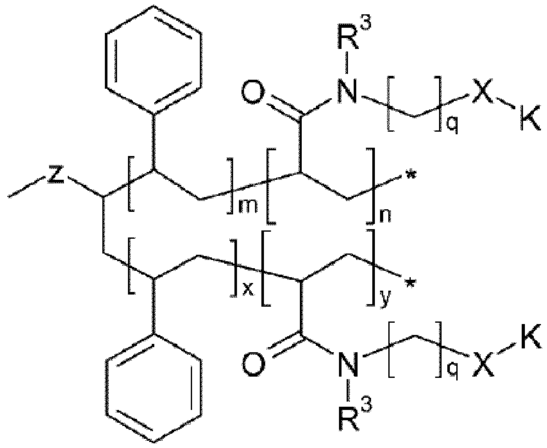

(II)

Man erkennt dass dieser Übergangsmetallkomplex kovalent mit dem Träger verbunden ist und in einer Atmosphäre aus überkritischem Kohlendioxid eingesetzt wird.

D. Trong et al. geben in Applied Catalysis A: General 253 (2003) 545-602 eine Übersicht über eine Vielzahl von mesoporen Molekularsieben unter anderem auch ein phosphiniertes mesopores Molekularsieb, an dem Norbonen in einer Ringöffnungsmetathesepolymerisation umgesetzt wird und Diallylamin bzw. Diethyldiallylmalonat in einer Ringschlussmetathese.

Die vorangehend beschriebenen Katalysatorsysteme sind hinsichtlich ihrer Wirtschaftlichkeit in industriellen Prozessen noch nicht optimal, beispielsweise weil die Kosten für die Katalysatorherstellung zu hoch sind oder weil die Standzeiten der Katalysatoren in kontinuierlich betriebenen Verfahren noch nicht ausreichend sind.

Ausgehend von diesem Stand der Technik bestand die Aufgabe darin, wirtschaftlich vorteilhafte Verfahren zur

Herstellung von Cycloalkadienen aus Cycloalkenmonomeren, Polycycloalkenylenen oder Gemischen aus beiden, unter Verwendung von geträgerten Ruthenium-Carben-Komplexen zu finden, sowie für solche Verfahren geeignete Katalysatorsysteme auf Basis von geträgerten Ruthenium-Carben-Komplexen zu identifizieren.

Diese Aufgabe wird gelöst durch ein Verfahren zur Herstellung von Cycloalkadienen aus Cycloalkenmonomeren, Polycycloalkenylenen oder Gemischen aus beiden in Gegenwart eines Trägerkatalysators, der mindestens einen Ruthenium-Carben-Komplex der Formel IV

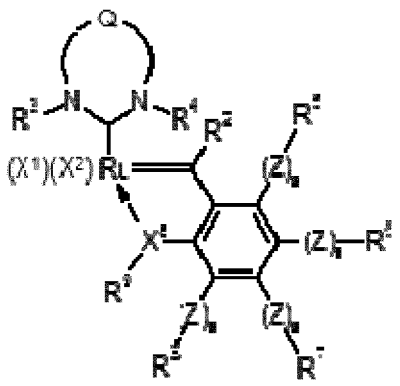

(IV)

worin

| | |
|---|---|
| $X^1$, $X^2$ | gleich oder verschieden sind, insbesondere gleich, und für jeweils einen anionischen Liganden stehen, der ausgewählt ist aus der Gruppe bestehend aus Fluor, Chlor, Brom, lod, vorzugsweise Chlor, bevorzugt stehen $X^1$ und $X^2$ für Chlor; |
| Q | eine zweibindige organische Gruppe mit 1 bis 40 Kohlenstoffatomen ist, die ausgewählt ist aus einer zweibindigen Kohlenwasserstoffgruppe oder einer substituierten zweibindigen Kohlenwasserstoffgruppe; |
| $R^2$ | Wasserstoff oder einen $C_1$-$C_{40}$-kohlenstoffhaltigen Rest bedeutet; |
| $R^3$ | Wasserstoff oder $C_7$-$C_{40}$-Arylalkyl bedeutet; |
| $R^4$ | Wasserstoff oder $C_7$-$C_{40}$-Arylalkyl bedeutet; |
| $X^5$ | O ist, |
| Z | unabhängig voneinander O oder $NR^{10}$ sind, |
| s | unabhängig voneinander 0 oder 1 sind, |
| R5, $R^6$, $R^7$, $R^8$, $R^9$ | unabhängig voneinander gleich oder verschieden sind, und jeweils Wasserstoff oder einen $C_1$-$C_{40}$-kohlenstoffhaltigen Rest bedeuten oder im Falle von s gleich 0 auch eine funktionelle Gruppe ausgewählt aus der Gruppe der Elemente bestehend aus $NO_2$, CN, COOH, $COOR^{10}$ und Halogen ist, und |
| $R^{10}$ | Wasserstoff oder einen $C_1$-$C_{40}$-kohlenstoffhaltigen Rest bedeutet, |

als katalytisch aktive Komponente und ein Siliziumdioxid als Trägermaterial umfasst, wobei das zur Trägerkatalysatorherstellung eingesetzte Siliziumdioxid ein getrocknetes Kieselgel ist, das auf seiner Oberfläche ein Verhältnis von OH-Gruppen zur $N_2$-BET-Oberfläche ($N_2$-BET-Oberfläche bestimmt nach DIN ISO 9277:2003-05) aufweist, das im Bereich von 0,1 bis 1,2 OH-Gruppen/$nm^2$ liegt, und dessen Poren einen gemittelten Durchmesser (ermittelt nach DIN ISO 66133) von 50 bis 70 Å aufweisen,
wobei bei der Trägerkatalysatorherstellung der Ruthenium-Carben-Komplex in einer solchen Menge im Verhältnis zum verwendeten Siliziumdioxid eingesetzt wird, dass das molare Verhältnis der OH-Gruppen auf der Oberfläche des Siliziumdioxids zum Ruthenium-Carben-Komplex mindestens 5 beträgt,

und wobei die chemische Reaktion in einem kontinuierlich betriebenen Reaktor durchgeführt wird. Im Verfahren können verschiedene chemische Reaktionen in Gegenwart des oben spezifizierten Trägerkatalysators in einem kontinuierlich betriebenen Reaktor durchgeführt werden. Beispiele für solche durch Ruthenium-Carben-Komplexe katalysierte Reaktionen sind die Olefin-Metathese, radikalische Additionen von Tetrachlormethan oder Chloroform an terminale Doppelbindungen (Atom Transfer Radical Addition), die radikalische 5-exo-trig-Cyclisierung von Diallylsystemen (Atom Transfer Radical Cyclization) oder die Aktivierung von Silanen zur Herstellung von Silyethern oder zur Hydrosilylierung von Carbonylverbindungen. Eine ausführliche Übersicht zur Verwendung von Ru-Carbenen in der organischen Synthese findet sich in: Alcaide, B.; Almendros, P; Luna, A., Chem. Rev. 2009, 109, 3817-3858.

Bevorzugt handelt es sich bei der chemischen Reaktion um eine Olefin-Metathese.

Der Terminus Olefin-Metathese bezeichnet die Umalkylidenierung zweier olefinischer Doppelbindungen unter Einwirkung eines Übergangsmetallkatalysators. Die wesentlichen Reaktionstypen sind die Kreuzmetathese, Ringschlussmetathese, Ringöffnungs-Kreuzmetathese, Ringöffnungsmetathese-Polymerisation und die metathetische Polymerisation acyclischer Diene. Eine ausführliche, aber nicht abschließende Übersicht findet sich z.B. in:

a) Ivin, K.J.; Mol, J.C., "Olefin Metathesis and Metathesis Polymerization", Academic Press, San Diego, 1997. b) Grubbs, R.H., "Handbook of Metathesis", Wiley VCH, 1. Auflage, Weinheim, 2003.

Bei der chemischen Reaktion handelt es sich insbesondere um eine Kreuzmetathese, Ringschlussmetathese, Ringöffnungs-Kreuzmetathese, Ringöffnungsmetathese-Polymerisation oder die metathetische Polymerisation acyclischer Diene.

Einen Olefin-Metathese Reaktionstyp stellen die Dimerisierung und Trimerisierung cyclischer Olefine zu cylischen Dienen bzw. cyclischen Trienen, insbesondere die Dimerisierung cyclischer Olefine zu cylischen Dienen dar.

Es handelt sich in dem erfindungsgemäßen Verfahren bei der Durchführung der chemischen Reaktion um die Herstellung von Cycloalkadienen aus Cycloalkenmonomeren, Polycycloalkenylenen oder Gemischen aus beiden.

Als Cycloalkenmonomere kommen beispielsweise Cyclopenten, Cyclohepten, Cycloocten und höhere Cycloalkene in Frage. Besonders bevorzugt sind Cyclopenten und Cycloocten, insbesondere Cycloocten.

Bei den Cycloalkadienen der allgemeinen Formel $C_{2n}H_{4n-4}$ handelt es sich bevorzugt um Dimere gebildet aus zwei Molekülen eines Cycloalkenmonomers der allgemeinen Formel $C_nH_{2n-2}$, wobei n gleich 5 bis 20, bevorzugt 6 bis 15, besonders bevorzugt 7 bis 10, insbesondere 8 ist.

Da es sich bei der Olefin-Metathese um eine reversible Reaktion handelt, lassen sich die Cycloalkadiene der allgemeinen Formel $C_{2n}H_{4n-4}$ auch durch Rückreaktion der entsprechenden Polycycloalkenylene der allgemeinen Formel $(C_nH_{2n-2})_m$ gewinnen, wobei m eine ganze Zahl größer oder gleich 3 ist und n wie voran stehend definiert ist.

Ganz besonders bevorzugt handelt es sich bei dem erfindungsgemäßen Verfahren um ein Verfahren zur Herstellung von 1,9-Cyclohexadecadien ($C_{16}H_{28}$) aus Cycloocten ($C_8H_{14}$), Polycyclooctenylen ($(C_nH_{2n-2})_m$) oder Gemischen aus beiden.

Das erfindungsgemäße Verfahren kann üblicherweise je nach Reaktionstyp und eingesetzten Ausgangsverbindungen in einem Temperaturbereich zwischen -50 °C und 200 °C durchgeführt werden. Die Olefin-Metathese wird bevorzugt in einem Temperaturbereich zwischen 0 °C und 200 °C durchgeführt.

Das erfindungsgemäße Verfahren kann je nach eingesetzten Ausgangsverbindungen mit oder ohne Lösungsmittel durchgeführt werden. Bei der beschriebenen Olefin-Metathese wird das erfindungsgemäße Verfahren bevorzugt in einem Lösungsmittel oder Lösungsmittelgemisch durchgeführt, welches sich inert gegenüber dem Metathese-Katalysator verhält. Beispiele für solche inerten Lösungsmittel sind unter anderem aromatische Kohlenwasserstoffe (Benzol Toluol, Xylol, usw.), halogenierte aromatische Kohlenwasserstoffe, aliphatische Kohlenwasserstoffe (Pentan, Hexan, Cyclopentan, Cyclohexan, etc.), chlorierte Aliphaten (Dichlormethan, Dichlorethan, etc.) und Gemische daraus. Besonders bevorzugt wird das erfindungsgemäße Verfahren in aromatische oder aliphatischen Kohlenwasserstoffen durchgeführt, insbesondere in Alkanen, wie beispielsweise n-Heptan, oder Cycloalkanen, wie beispielsweise Cyclohexan.

Das erfindungsgemäße Verfahren wird trotz der relativen Unempfindlichkeit der verwendeten Ruthenium-Carben-Komplexe gegenüber Wasser und Sauerstoff bevorzugt mit möglichst wasserfreien Lösungsmitteln und Ausgangsverbindungen sowie unter Ausschluss von Luftsauerstoff, vorzugsweise unter einer Schutzgasatmosphäre, beispielsweise trockenem Stickstoff oder Argon, durchgeführt.

Der in dem erfindungsgemäßen Verfahren eingesetzte Trägerkatalysator umfasst mindestens einen Ruthenium-Carben-Komplex als katalytisch aktive Komponente und ein Siliziumdioxid als Trägermaterial.

Ruthenium-Carben-Komplexe enthalten als zentrales Komplexfragment mindestens eine Ruthenium-Kohlenstoff-Doppelbindung und werden zur Klasse der Metallaalkyliden-Komplexe gezählt. Neben einkernigen Komplexen, solchen mit einem Rutheniumatom, gibt es auch zweikernige oder mehrkernige Komplexe, nämlich solche mit zwei oder mehr Rutheniumatomen.

Erfindungsgemäß geeignete Ruthenium-Carben-Komplexe werden beispielsweise in WO 2010/021740, Seite 15, Absatz 0066 bis Seite 27 Absatz 00102 beschrieben.

$X^1$, $X^2$ können gleich oder verschieden sein, insbesondere gleich, und stehen jeweils für einen anionischen Liganden. Bevorzugt stehen $X^1$, $X^2$ für Halogen, beispielsweise Fluor, Chlor, Brom, Iod, vorzugsweise Chlor. Besonders bevorzugt stehen $X^1$ und $X^2$ für Chlor

Bevorzugte neutrale Elektronendonorliganden werden in WO 2010/021740, Seite 16, Absatz 0070 und Seite 17, Absatz 0075 beschrieben. Besonders bevorzugte neutrale Elektronendonorliganden sind mit zwei Atomen der 15. oder 16. Gruppe des Periodensystems der Elemente, insbesondere mit zwei Stickstoffatomen stabilisierte Carbene (sogenannte Arduengo-Carbene), sowie Ether, Thioether, Amine oder stickstoffhaltige Heterocyclen, insbesondere Pyridin oder Pyridinderivate.

$R^2$ bedeutet Wasserstoff oder einen $C_1$-$C_{40}$-kohlenstoffhaltigen Rest, wie beispielsweise $C_1$-$C_{20}$-Alkyl, $C_2$-$C_{20}$-Alkenyl, $C_2$-$C_{20}$-Alkinyl, $C_6$-$C_{40}$-Aryl, $C_7$-$C_{40}$-Alkylaryl, $C_7$-$C_{40}$-Arylalkyl, $C_2$-$C_{40}$-heteroaromatischer Rest, gesättigter $C_3$-$C_{20}$-heterocyclische Rest oder Silyrest mit 3 bis 24 Kohlenstoffatomen, wobei der kohlenstoffhaltige Rest weitere Heteroatome ausgewählt aus der Gruppe der Elemente bestehend aus F, Cl, Br, I, N, P, O und S enthalten kann und/oder mit funktionellen Gruppen substituiert sein kann.

Zwei oder mehrere der Liganden oder Reste ausgewählt aus der Gruppe bestehend aus $X^1$, $X^2$ und $R^2$ können auch miteinander verbunden sein und ein cyclisches oder polycyclisches Ringsystem bilden.

$R^3$, $R^4$ können gleich oder verschieden sein und bedeuten unabhängig voneinander jeweils Wasserstoff oder $C_7$-$C_{40}$-Arylalkyl.

Q ist eine zweibindige organische Gruppe mit 1 bis 40 Kohlenstoffatomen. Die zweibindige organische Gruppe mit 1 bis 40 Kohlenstoffatomen kann beispielsweise eine zweibindige Kohlenwasserstoffgruppe, eine substituierte zweibindige Kohlenwasserstoffgruppe sein.

In dem erfindungsgemäßen Verfahren wird ein Ruthenium-Carben-Komplex der Formel (IV) eingesetzt,

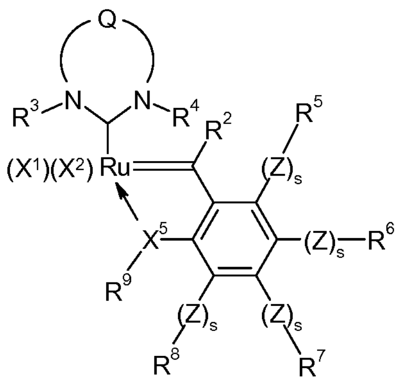

(IV)

worin

| | |
|---|---|
| $X^1$, $X^2$ | gleich oder verschieden sind, insbesondere gleich, und für jeweils einen anionischen Liganden stehen, der ausgewählt ist aus der Gruppe bestehend aus Fluor, Chlor, Brom, Iod, vorzugsweise Chlor, bevorzugt stehen $X^1$ und $X^2$ für Chlor<br>Q eine zweibindige organische Gruppe mit 1 bis 40 Kohlenstoffatomen ist, die ausgewählt ist aus einer zweibindigen Kohlenwasserstoffgruppe oder einer substituierten zweibindigen Kohlenwasserstoffgruppe;<br>$R^2$ Wasserstoff oder einen $C_1$-$C_{40}$-kohlenstoffhaltigen Rest bedeutet;<br>$R^3$ Wasserstoff oder $C_7$-$C_{40}$-Arylalkyl bedeutet;<br>$R^4$ Wasserstoff oder $C_7$-$C_{40}$-Arylalkyl bedeutet; |
| $X^5$ | O ist, |
| Z | unabhängig voneinander O oder $NR^{10}$ sind, |
| s | unabhängig voneinander 0 oder 1 sind, |
| $R^5$, $R^6$, $R^7$, $R^8$, $R^9$ | unabhängig voneinander gleich oder verschieden sein können, und jeweils Wasserstoff oder einen $C_1$-$C_{40}$-kohlenstoffhaltiger Rest bedeuten oder im Falle von s gleich 0 auch eine funktionelle Gruppe ausgewählt aus der Gruppe der Elemente bestehend aus $NO_2$, CN, COOH, $COOR^{10}$ und Halogen sein können, und |

$R^{10}$ Wasserstoff oder einen $C_1$-$C_{40}$-kohlenstoffhaltiger Rest bedeuten.

$R^5$, $R^6$, $R^7$, $R^8$, $R^9$ können unabhängig voneinander gleich oder verschieden sein, und bedeuten jeweils Wasserstoff oder einen $C_1$-$C_{40}$-kohlenstoffhaltiger Rest, wie beispielsweise $C_1$-$C_{20}$-Alkyl, $C_2$-$C_{20}$-Alkenyl, $C_2$-$C_{20}$-Alkinyl, $C_6$-$C_{40}$-Aryl, $C_7$-$C_{40}$-Alkylaryl, $C_7$-$C_{40}$-Arylalkyl, $C_2$-$C_{40}$-heteroaromatischer Rest, gesättigter $C_3$-$C_{20}$-heterocyclische Rest oder Silylrest mit 3 bis 24 Kohlenstoffatomen, wobei der kohlenstoffhaltige Rest weitere Heteroatome ausgewählt aus der Gruppe der Elemente bestehend aus F, Cl, Br, I, N, P, O und S enthalten kann und/oder mit funktionellen Gruppen substituiert sein kann oder im Falle von s gleich 0 auch eine funktionelle Gruppe ausgewählt aus der Gruppe der Elemente bestehend aus $NO_2$, CN, COOH, $COOR^{10}$ und Halogen, wie F, Cl, Br oder I sein können.

Der oder die Reste $R^{10}$ können unabhängig voneinander gleich oder verschieden sein, und jeweils Wasserstoff oder einen $C_1$-$C_{40}$-kohlenstoffhaltiger Rest bedeuten, wie beispielsweise $C_1$-$C_{20}$-Alkyl, $C_2$-$C_{20}$-Alkenyl, $C_2$-$C_{20}$-Alkinyl, $C_6$-$C_{40}$-Aryl, $C_7$-$C_{40}$-Alkylaryl, $C_7$-$C_{40}$-Arylalkyl, $C_2$-$C_{40}$-heteroaromatischer Rest, gesättigter $C_3$-$C_{20}$-heterocyclische Rest oder Silyrest mit 3 bis 24 Kohlenstoffatomen, wobei der kohlenstoffhaltige Rest weitere Heteroatome ausgewählt aus der Gruppe der Elemente bestehend aus F, Cl, Br, I, N, P, O und S enthalten kann und/oder mit funktionellen Gruppen substituiert sein kann.

Der in dem erfindungsgemäßen Verfahren eingesetzte Trägerkatalysator umfasst neben dem oben beschriebenen Ruthenium-Carben-Komplex als eine weiter Komponente ein Siliziumdioxid, welches vor der Trägerkatalysatorherstellung auf seiner Oberfläche ein Verhältnis von OH-Gruppen zur $N_2$-BET-Oberfläche aufweist, das zwischen 0,1 und 1,2 OH-Gruppen/$nm^2$ liegt.

Die OH-Dichte der Trägeroberfläche kann über ein beliebiges, dem Fachmann bekanntes Verfahren eingestellt werden. Besonders geeignete Methoden zur Einstellung der OH-Dichte der Trägeroberfläche sind eine thermische Behandlung des Trägers, beispielsweise unter $N_2$ oder Luft, sowie gegebenenfalls unter vermindertem Druck im Vakuum, oder die chemische Abreaktion der OH-Gruppen an der Trägeroberfläche, beispielsweise mittels Umsetzung der OH-Gruppen der Oberfläche, auch Silanolgruppen genannt, mit Trimethylsilylchlorid, Kaliumhexamethyldisilazan oder anderen geeigneten Silylierungsmitteln oder beispielsweise durch Alkylierung, insbesondere Methylierung mit Dimethylsulfat, Methyljodid oder anderen geeigneten Alkylierungsreagenzien.

Bevorzugt wird in dem erfindungsgemäßen Verfahren das Verhältnis von OH-Gruppen zur $N_2$-BET-Oberfläche auf der Oberfläche des verwendeten Siliziumdioxides durch thermische Behandlung des Siliziumdioxides eingestellt. Üblicherweise wird dazu das Siliziumdioxid für eine gewisse Zeit bei einer Temperatur von 200 °C bis 1200 °C, bevorzugt von 400 °C bis 1100 °C getrocknet, bis das gewünschte Verhältnis von OH-Gruppen zur $N_2$-BET-Oberfläche erreicht ist.

Die Bestimmung der $N_2$-BET-Oberfläche sowie die Bestimmung der Anzahl der OH-Gruppen auf der Oberfläche des eingesetzten Siliziumdioxides wird nach Methoden vorgenommen, die dem Fachmann bekannt sind und die detailliert im Experimentalteil beschrieben werden.

Ein Aspekt der Erfindung ist ein erfindungsgemäßes Verfahren, wobei bei der Trägerkatalysatorherstellung der Ruthenium-Carben-Komplex in einer solchen Menge im Verhältnis zum verwendeten Siliziumdioxid eingesetzt wird, dass das molare Verhältnis der OH-Gruppen auf der Oberfläche des Siliziumdioxids zum Ruthenium-Carben-Komplex mindestens 5, bevorzugt mindestens 10, insbesondere mindestens 20 beträgt.

Besonders bevorzugt ist ein Siliziumdioxid, das oberflächlich nicht so modifiziert wurde, dass für die Ruthenium-Carben-Komplexe zusätzlich zu den OH-Gruppen (Silanolgruppen) weitere Bindungsstellen, das heißt für eine bindende chemische oder physikalische Wechselwirkung geeignete Stelle, geschaffen werden. Dies umfasst explizit nicht Siliziumdioxide, deren OH-Gruppen auf der Oberfläche wie vorangehend beschrieben nur passiviert oder maskiert wurden, z. B. mittels Umsetzung mit Trimethylsilylchlorid oder ähnlich wirkenden Reagenzien.

Die als Trägermaterial zu verwendenden Siliziumdioxide weisen vorzugsweise eine $N_2$-BET-Oberfläche im Bereich von 10 bis 1000 $m^2$/g, bevorzugt von 300 bis 900 $m^2$/g, besonders bevorzugt 450 bis 800 $m^2$/g, und vorzugsweise ein Porenvolumen im Bereich von 0,1 bis 5 ml/g, bevorzugt im Bereich von 0,5 bis 3,5 ml/g, wobei die Poren einen gemittelten Durchmesser von 50 bis 70 Å aufweisen.

Das als Trägermaterial zu verwendende Siliziumdioxid liegt als Pulver mit einem mittleren Partikeldurchmesser von 0,1 bis 500 $\mu$m vor.

Bei dem in dem erfindungsgemäßen Verfahren verwendeten Siliziumdioxid handelt es sich um ein Kieselgel, das getrocknet wurde.

In dem erfindungsgemäßen Verfahren wird ein Siliziumdioxid eingesetzt, das ein getrocknetes Kieselgel ist, das ein Verhältnis von OH-Gruppen zur $N_2$-BET-Oberfläche aufweist, das im Bereich von 0,1 bis 1,2 OH-Gruppen/$nm^2$ liegt, und dessen Poren einen gemittelten Durchmesser von 50 bis 70 Å aufweisen, und insbesondere zudem eine $N_2$-BET-Oberfläche von 450 bis 800 $m^2$/g hat.

Der Trägerkatalysator kann beispielsweise durch einfache Zusammengabe einer Lösung des Ruthenium-Carben-Komplexes mit dem Siliziumdioxid als Trägermaterial und optional anschließenden Filtrations-, Wasch- und/oder Trocknungschritten hergestellt werden, so wie beispielsweise in Adv. Synth. Catal. 2008, 350, 1949 - 1953 beschrieben.

Die chemische Reaktion, die in dem erfindungsgemäßen Verfahren durchgeführt wird, wird in einem kontinuierlich betriebenen Reaktor durchgeführt.

Ein kontinuierlicher Prozess ist dadurch gekennzeichnet, dass gleichzeitig dem Reaktionsraum/Reaktor Ausgangsstoffe (evtl. zusammen mit weiteren Stoffen, wie Lösungsmitteln, Gasen, etc.) zugeführt werden und aus diesem Reaktionsraum/Reaktor ein Produktstrom entnommen wird. Eine allgemeine Beschreibung kontinuierlicher Prozesse und alternativer Definitionen findet sich in den Lehrbüchern zur chemischen Verfahrenstechnik (z. B. E. Fitzner, W. Fritz, E. Klemm "Technische Chemie: Einführung in die chemische Reaktionstechnik", 2005, 5. Auflage, Springer, Berlin - ISBN 3540234527). Für kontinuierliche Verfahren besonders geeignete Reaktoren sind z. B. Rohreaktoren, kontinuierlich betriebene Rührkessel(kaskaden), usw. Auch hier findet sich eine ausführliche Beschreibung in der zitierten Literatur.

Das erfindungsgemäße Verfahren wird bevorzugt in einem Rohrreaktor, Rohrbündelreaktor oder einer kontinuierlich betriebenen Rührkesselkaskade, besonders bevorzugt in einem Rohrreaktor oder Rohrbündelreaktor durchgeführt.

Im erfindungsgemäßen Verfahren wird über die Lebenszeit/Standzeit des Katalysators hinweg durch den Reaktionsraum eine Eduktmenge geschleust, die in Summe bevorzugt eine um den Faktor 20, besonders bevorzugt um den Faktor 100, insbesondere um den Faktor 1000 größere Masse hat als der Trägerkatalysator selbst.

In dem erfindungsgemäßen Verfahren wird im Falle der Dimerisierung cyclischer Olefine zu cylischen Dienen die Reaktion in dem kontinuierlich betriebenen Reaktor vorzugsweise so geführt, dass in dem ausgeschleusten Reaktionsgemisch der Gewichtsanteil an cylischen Dienen bezogen auf die Gesamtmasse aus cyclischem Olefin, cyclischem Dien und Polymer bei mehr 10%, besonders bevorzugt im Bereich von 20 bis 50% liegt.

Ein weiterer Gegenstand der Erfindung ist auch die Verwendung eines Trägerkatalysators, der mindestens einen Ruthenium-Carben-Komplex der Formel IV

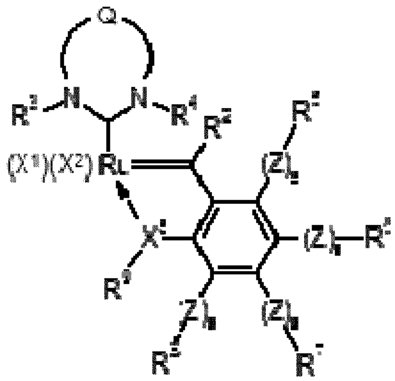

(IV)

worin

| | |
|---|---|
| $X^1$, $X^2$ | gleich oder verschieden sind, insbesondere gleich, und für jeweils einen anionischen Liganden stehen, der ausgewählt ist aus der Gruppe bestehend aus Fluor, Chlor, Brom, lod, vorzugsweise Chlor, bevorzugt stehen $X^1$ und $X^2$ für Chlor; |
| Q | eine zweibindige organische Gruppe mit 1 bis 40 Kohlenstoffatomen ist, die ausgewählt ist aus einer zweibindigen Kohlenwasserstoffgruppe oder einer substituierten zweibindigen Kohlenwasserstoffgruppe; |
| $R^2$ | Wasserstoff oder einen $C_1$-$C_{40}$-kohlenstoffhaltigen Rest bedeutet; |
| $R^3$ | Wasserstoff oder $C_7$-$C_{40}$-Arylalkyl bedeutet; |
| $R^4$ | Wasserstoff oder $C_7$-$C_{40}$-Arylalkyl bedeutet; |
| $X^5$ | O ist, |
| Z | unabhängig voneinander O oder $NR^{10}$ sind, |
| s | unabhängig voneinander 0 oder 1 sind, |
| $R^5$, $R^6$, $R^7$, $R^8$, $R^9$ | unabhängig voneinander gleich oder verschieden sind, und jeweils Wasserstoff oder einen |

$C_1$-$C_{40}$-kohlenstoffhaltigen Rest bedeuten oder im Falle von s gleich 0 auch eine funktionelle Gruppe ausgewählt aus der Gruppe der Elemente bestehend aus $NO_2$, CN, COOH, $COOR^{10}$ und Halogen ist, und

$R^{10}$ Wasserstoff oder einen $C_1$-$C_{40}$-kohlenstoffhaltigen Rest bedeutet,

als katalytisch aktive Komponente und ein Siliziumdioxid als Trägermaterial umfasst, wobei das zur Trägerkatalysatorherstellung eingesetzte Siliziumdioxid ein getrocknetes Kieselgel ist, das auf seiner Oberfläche ein Verhältnis von OH-Gruppen zur $N_2$-BET-Oberfläche ($N_2$-BET-Oberfläche bestimmt nach DIN ISO 9277:2003-05) aufweist, das im Bereich von 0,1 bis 1,2 OH-Gruppen/$nm^2$ liegt und dessen Poren einen gemittelten Durchmesser (ermittelt nach DIN ISO 66133) von 50 bis 70 Å aufweisen, wobei bei der Trägerkatalysatorherstellung der Ruthenium-Carben-Komplex in einer solchen Menge im Verhältnis zum verwendeten Siliziumdioxid eingesetzt wird, dass das molare Verhältnis der OH-Gruppen auf der Oberfläche des Siliziumdioxids zum Ruthenium-Carben-Komplex mindestens 5 beträgt,, als heterogenes Katalysatorsystem zur Herstellung von Cycloalkadienen aus Cycloalkenmonomeren, Polycycloalkenylenen oder Gemischen aus beiden, wobei die chemische Reaktion in einem kontinuierlich betriebenen Reaktor durchgeführt wird.

Bevorzugte Ausführungsformen hinsichtlich des Ruthenium-Carben-Komplexes, des Siliziumdioxides, der chemischen Reaktion und des kontinuierlich betriebenen Reaktors wurden voranstehend im Zusammenhang mit dem erfindungsgemäßen Verfahren diskutiert und sind auf die erfindungsgemäße Verwendung eines Trägerkatalysators in gleicher Weise anwendbar.

Die Erfindung wird durch folgende, die Erfindung jedoch nicht einschränkende Beispiele erläutert.

Träger:

Die Silikagele GD SP550 10012 und 10020, mit einem mittleren Porendurchmessern von 30 bzw. 60 Å, wurden von der Fa. Grace Davison erhalten. Der mikroporöse Träger D11-10 ist ein Verkaufsprodukt der Fa. BASF SE. Das mesoporöse Material MCM-41 (mittlerer Porendurchmesser 180 Å) wurde nach einer Literaturvorschrift (V. Mynen, P. Cool, E. F. Vansant "Verified syntheses of mesoporous materials" Micropor. Mesopor. Mater. 2009, 125, 170-223, 6.4) selbst synthetisiert. In derselben Literaturstelle ist auch der Strukturtypus MCM-41 erläutert unter Angabe von weiterführender Literatur.

Trägervorbereitung:

Für die Kalzination wurde das Material mit einer Aufheizrate von 2 °C/min unter einer Stickstoffatmosphäre auf die gewünschte Temperatur $T_{kalz.}$ gebracht, dort für 4 h gehalten und anschließend auf Raumtemperatur abgekühlt. Die Träger wurden direkt vor dem Tränkungsschritt (s. u.) kalziniert und nach der Kalzination nur noch unter $N_2$ gehandhabt.

Trägeranalytik:

Bestimmung der $N_2$-BET-Oberfläche:

Die Bestimmung der $N_2$-BET-Oberfläche wurde gemäß der DIN ISO 9277:2003-05 "Bestimmung der spezifischen Oberfläche von Feststoffen durch Gasadsorption nach dem BET-Verfahren" (ISO 9277:1995, Ausgabedatum 2003-05) mittels $N_2$-Adsorption durchgeführt.

Bestimmung der OH-Gruppenanzahl des Trägers:

Die Anzahl der OH-Gruppen an der Trägeroberfläche wurde gravimetrisch bestimmt. Hierzu wurde der Träger mit 5 °C/min auf die der Trägerkalzination entsprechende Temperatur $T_{kalz.}$ aufgeheizt und bei dieser Temperatur für 4 h gehalten. Anschließend wurde der Träger weiter mit 5 °C/min auf 1200 °C aufgeheizt. Die während dieser zweiten Aufheizphase erfolgende Masseänderung wurde detektiert.

Das im Intervall von der zu untersuchenden Temperatur bis 1200 °C freiwerdende Wasser entstammte der Kondensation von OH-Gruppen auf der Trägeroberfläche. Je zwei Si-OH-Einheiten bilden dabei ein Wassermolekül und vernetzen selbst unter Ausbildung einer Si-O-Si-Einheit. Damit ließ sich der Gewichtsverlust des Trägers mit der Anzahl kondensierter OH-Gruppen in folgende Relation setzen:

$$\frac{\text{Anzahl(OH)}}{\text{m(Probe)}} = 2\frac{\Delta\text{m} \cdot N_\text{A}}{\text{M(H}_2\text{O)} \cdot \text{m(Probe)}} \quad \text{mit der Einheit } \frac{1}{\text{g}}$$

Berechnung der OH-Dichte des Trägers:

Der Bezug aus OH-Gruppenanzahl je Trägermasse bei $T_{kalz.}$ und $N_2$-BET-Oberfläche des Trägers (abgekürzt BET) lieferte die OH-Dichte des Trägers:

$$\text{OH - Dichte}(T_{kalz.}) = \frac{\text{Anzahl(OH)}}{\text{m(Probe)} \cdot \text{BET}} \quad \text{mit der Einheit } \frac{1}{nm^2}$$

Methode zur Bestimmung der Porosität von Feststoffen:

Die Porosität der Träger wurde gemäß der DIN ISO 66133 "Bestimmung der Porenvolumenverteilung und der spezifischen Oberfläche von Feststoffen durch Quecksilberintrusion" (Ausgabedatum 1993-06) ermittelt.

Ergebnisse für die verwendeten Träger:

erfindungsgemäße Träger:

GD SP550 10020 - 1,2 OH/$nm^2$ bei 550 °C - 0,4 OH/$nm^2$ bei 850 °C
MCM-41 - 1,6 OH/$nm^2$ bei 550 °C

nicht erfindungsgemäße Träger:

D11-10 - 5,5 OH/$nm^2$ bei 550 °C
GD SP550 10012 - 7,0 OH/$nm^2$ bei 550 °C
GD SP550 10020 - 3,5 OH/$nm^2$ unkalz.

Bei dem in den Beispielen eingesetzten Ru-Komplex 1 handelt es sich um den Rutheniumkomplex der Formel (a)

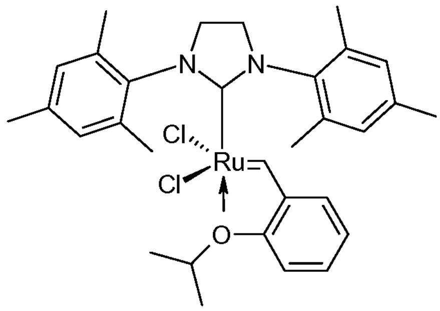

(a)

Beispiele

Vorbemerkung: Der Eduktstrom wurde zur Entfernung von Wasser über ein Reinigungsbett enthaltend 4 Å Molekularsieb und zur Entfernung von Oxygenaten über ein Reinigungsbett enthaltend R3-11G Absorber (Firma BASF SE) geführt, bevor er mit dem Katalysator in Berührung kam.

Beispiel 1:

Katalysatorherstellung:

Silikagel der Firma Grace (Typ SP550-10020 ID 4907) wurde in einem Quarzrohr bei 550 °C unter einem leichten Stickstoffstrom für 4 h calciniert. Die OH-Dichte an der Oberfläche des Trägers wurde gemessen und betrug 1,2 OH-Gruppen/$nm^2$. Zur Herstellung des heterogenen Katalysators wurden 20 g des so erhaltenen Silikas in Dichlormethan suspendiert und 81 mg Ru-Komplex 1 zugegeben. Die Suspension wurde für 2 h geschwenkt und anschließend das Lösungsmittel im Vakuum entfernt. Der erhaltene Feststoff war grün gefärbt und enthielt 67 mg Ru/100 g Katalysator.

Metatheseraktion:

Ein vertikal angeordneter Rohrreaktor (Durchmesser: 14 mm, Länge: 45 cm) wurde im Inertgasgegenstrom zuerst mit ca. 20 g des oben hergestellten Trägerkatalysators beschickt und das darüber liegende Reaktorvolumen mit Glasperlen aufgefüllt. Die Schüttung wurde bei 60 °C und leichtem Überdruck kontinuierlich von einer Lösung aus Cyclooctenin Cyclohexan (0,7 Gew.-%) von unten angeströmt, wobei eine Flussrate von 8 mL Feed pro Minute eingestellt wurde. Der Umsatz zu Beginn des Experiments betrug > 90 % bei einer Selektivität von 20-25 % für 1,9-Cyclohexadecadien. Die Gesamtselektivität zu Polycyclooctenylenen betrug >99%. Nach 90 h betrug der Umsatz von Cycloocten noch etwa 75%.

Beispiel 2:

Katalysatorherstellung:

Silikagel der Firma Grace (Typ SP550-10020 ID 4907) wurde in einem Quarzrohr bei 850 °C unter einem leichten Stickstoffstrom für 4 h calciniert. Die OH-Dichte an der Oberfläche des Trägers wurde gemessen und betrug 0,4 OH-Gruppen/$nm^2$. Zur Herstellung des heterogenen Katalysators wurden 20 g des so erhaltenen Silikas in Dichlormethan suspendiert und 81 mg Ru-Komplex 1 zugegeben. Die Suspension wurde für 2 h geschwenkt und anschließend das Lösungsmittel im Vakuum entfernt. Der erhaltene Feststoff war grün gefärbt und enthielt 68 mg Ru/100 g Katalysator.

Metatheseraktion:

Ein vertikal angeordneter Rohrreaktor (Durchmesser: 14 mm, Länge: 45 cm) wurde im Inertgasgegenstrom zuerst mit ca. 20 g des oben hergestellten Trägerkatalysators beschickt und das darüber liegende Reaktorvolumen mit Glasperlen aufgefüllt. Die Schüttung wurde bei 60 °C und leichtem Überdruck kontinuierlich von einer Lösung aus Cycloocten in Cyclohexan (0,7 Gew.-%) von unten angeströmt, wobei eine Flussrate von 8 mL Feed pro Minute eingestellt wurde. Der Umsatz zu Beginn des Experiments betrug > 90 % bei einer Selektivität von 20-25 % für 1,9-Cyclohexadecadien. Die Gesamtselektivität zu Polycyclooctenylenen betrug >99%. Nach 175 h betrug der Umsatz von Cycloocten noch etwa 75%.

Beispiel 3:

Katalysatorherstellung:

15 g Silikagel vom Typ MCM-41 (die OH-Dichte an der Oberfläche des Trägers wurde gemessen und betrug 1,6 OH-Gruppen/$nm^2$) wurden in Dichlormethan suspendiert und 83 mg Ru-Komplex 1 zugegeben. Die Suspension wurde für 2 h geschwenkt und anschließend das Lösungsmittel im Vakuum entfernt. Der erhaltene Feststoff war grün gefärbt und enthielt 111 mg Ru/100 g Katalysator.

Metatheseraktion:

Ein vertikal angeordneter Rohrreaktor (Durchmesser: 14 mm, Länge: 45 cm) wurde im Inertgasgegenstrom zuerst mit ca. 15 g des oben hergestellten Trägerkatalysators beschickt und das darüber liegende Reaktorvolumen mit Glasperlen aufgefüllt. Die Schüttung wurde bei 60 °C und leichtem Überdruck kontinuierlich von einer Lösung aus Cycloocten in Cyclohexan (0,7 Gew.-%) von unten angeströmt, wobei eine Flussrate von 8 mL Feed pro Minute eingestellt wurde. Der Umsatz zu Beginn des Experiments betrug > 90 % bei einer Selektivität von 20-25 % für 1,9-Cyclohexadecadien. Die Gesamtselektivität zu Polycyclooctenylenen betrug >99%. Nach 10 h betrug der Umsatz von Cycloocten noch etwa 75%.

Vergleichsbeispiel 4:

Katalysatorherstellung:

20 g Silikagel der Firma Grace (Typ SP550-10020 ID 4907, OH-Dichte an der Oberfläche des Trägers wurde gemessen und betrug 3,5 OH-Gruppen/$nm^2$) wurden in Dichlormethan suspendiert und 83 mg Ru-Komplex 1 zugegeben. Die Suspension wurde für 2 h geschwenkt und anschließend das Lösungsmittel im Vakuum entfernt. Der erhaltene Feststoff war grün gefärbt und enthielt 63 mg Ru/100 g Katalysator.

Metatheseraktion:

Ein vertikal angeordneter Rohrreaktor (Durchmesser: 14 mm, Länge: 45 cm) wurde im Inertgasgegenstrom zuerst mit ca. 20 g des oben hergestellten Trägerkatalysators beschickt und das darüber liegende Reaktorvolumen mit Glasperlen aufgefüllt. Die Schüttung wurde bei 60 °C und leichtem Überdruck kontinuierlich von einer Lösung aus Cycloocten in Cyclohexan (0,7 Gew.-%) von unten angeströmt, wobei eine Flussrate von 8 mL Feed pro Minute eingestellt wurde. Der Umsatz zu Beginn des Experiments betrug 65 % bei einer Selektivität von 20-25 % für 1,9-Cyclohexadecadien. Nach etwa 7 h betrug der Umsatz weniger als 10%.

Vergleichsbeispiel 5:

Katalysatorherstellung:

Silikagel der Firma Grace (Typ SP550-10012 ID 4906) wurde in einem Quarzrohr bei 550 °C unter einem leichten Stickstoffstrom für 4 h calciniert. Die OH-Dichte an der Oberfläche des Trägers wurde gemessen und betrug 7,0 OH-Gruppen/$nm^2$. Zur Herstellung des heterogenen Katalysators wurden 28 g des so erhaltenen Silikas in Dichlormethan suspendiert und 83 mg Ru-Komplex 1 zugegeben. Die Suspension wurde für 2 h geschwenkt und anschließend das Lösungsmittel im Vakuum entfernt. Der erhaltene Feststoff war grün gefärbt und enthielt 46 mg Ru/100 g Katalysator.

Metatheseraktion:

Ein vertikal angeordneter Rohrreaktor (Durchmesser: 14 mm, Länge: 45 cm) wurde im Inertgasgegenstrom zuerst mit ca. 20 g des oben hergestellten Trägerkatalysators beschickt und das darüber liegende Reaktorvolumen mit Glasperlen aufgefüllt. Die Schüttung wurde bei 60 °C und leichtem Überdruck kontinuierlich von einer Lösung aus Cycloocten in Cyclohexan (0,7 Gew.-%) von unten angeströmt, wobei eine Flussrate von 8 mL Feed pro Minute eingestellt wurde. Der Umsatz zu Beginn des Experiments betrug > 80 % bei einer Selektivität von 20-25 % für 1,9-Cyclohexadecadien. Nach etwa 7 h betrug der Umsatz weniger als 40%.

Vergleichsbeispiel 6:

Katalysatorherstellung:

34,5 g Silikagel der Firma BASF (Typ D11-10, die OH-Dichte an der Oberfläche des Trägers wurde gemessen und betrug 7,4 OH-Gruppen/$nm^2$) wurden in Dichlormethan suspendiert und 160 mg Ru-Komplex 1 zugegeben. Die Suspension wurde für 2 h geschwenkt und anschließend das Lösungsmittel im Vakuum entfernt. Der erhaltene Feststoff war grün gefärbt und enthielt 72 mg Ru/100 g Katalysator.

Metatheseraktion:

Ein vertikal angeordneter Rohrreaktor (Durchmesser: 14 mm, Länge: 45 cm) wurde im Inertgasgegenstrom zuerst mit ca. 20 g des oben hergestellten Trägerkatalysators beschickt und das darüber liegende Reaktorvolumen mit Glasperlen aufgefüllt. Die Schüttung wurde bei 60 °C und leichtem Überdruck kontinuierlich von einer Lösung aus Cycloocten in Cyclohexan (0,7 Gew.-%) von unten angeströmt, wobei eine Flussrate von 16 mL Feed pro Minute eingestellt wurde. Der Umsatz zu Beginn des Experiments betrug > 25 % bei einer Selektivität von 25-35 % für 1,9-Cyclohexadecadien. Nach etwa 7 h betrug der Umsatz weniger als 5%.

## Patentansprüche

1. Verfahren zur Herstellung von Cycloalkadienen aus Cycloalkenmonomeren, Polycycloalkenylenen oder Gemischen aus beiden in Gegenwart eines Trägerkatalysators, der mindestens einen Ruthenium-Carben-Komplex der Formel IV

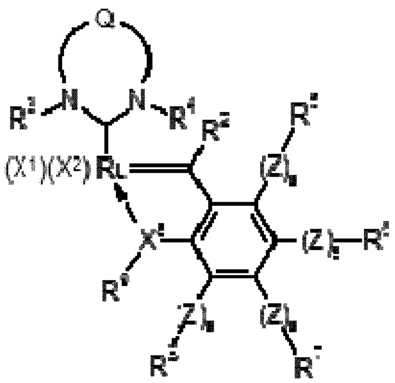

(IV)

worin

$X^1$, $X^2$ gleich oder verschieden sind, insbesondere gleich, und für jeweils einen anionischen Liganden stehen, der ausgewählt ist aus der Gruppe bestehend aus Fluor, Chlor, Brom, lod, vorzugsweise Chlor, bevorzugt stehen $X^1$ und $X^2$ für Chlor;
Q eine zweibindige organische Gruppe mit 1 bis 40 Kohlenstoffatomen ist, die ausgewählt ist aus einer zweibindigen Kohlenwasserstoffgruppe oder einer substituierten zweibindigen Kohlenwasserstoffgruppe;
$R^2$ Wasserstoff oder einen $C_1$-$C_{40}$-kohlenstoffhaltigen Rest bedeutet;
$R^3$ Wasserstoff oder $C_7$-$C_{40}$-Arylalkyl bedeutet;
$R^4$ Wasserstoff oder $C_7$-$C_{40}$-Arylalkyl bedeutet;
$X^5$ O ist,
Z unabhängig voneinander O oder $NR^{10}$ sind,
s unabhängig voneinander 0 oder 1 sind,
R5, $R^6$, $R^7$, $R^8$, $R^9$ unabhängig voneinander gleich oder verschieden sind, und jeweils Wasserstoff oder einen $C_1$-$C_{40}$-kohlenstoffhaltigen Rest bedeuten oder im Falle von s gleich 0 auch eine funktionelle Gruppe ausgewählt aus der Gruppe der Elemente bestehend aus $NO_2$, CN, COOH, $COOR^{10}$ und Halogen ist, und
$R^{10}$ Wasserstoff oder einen $C_1$-$C_{40}$-kohlenstoffhaltigen Rest bedeutet,

als katalytisch aktive Komponente und ein Siliziumdioxid als Trägermaterial umfasst, wobei das zur Trägerkatalysatorherstellung eingesetzte Siliziumdioxid ein getrocknetes Kieselgel ist, das auf seiner Oberfläche ein Verhältnis von OH-Gruppen zur $N_2$-BET-Oberfläche ($N_2$-BET-Oberfläche bestimmt nach DIN ISO 9277:2003-05) aufweist, das im Bereich von 0,1 bis 1,2 OH-Gruppen/$nm^2$ liegt, und dessen Poren einen gemittelten Durchmesser (ermittelt nach DIN ISO 66133) von 50 bis 70 Å aufweisen,
wobei bei der Trägerkatalysatorherstellung der Ruthenium-Carben-Komplex in einer solchen Menge im Verhältnis zum verwendeten Siliziumdioxid eingesetzt wird, dass das molare Verhältnis der OH-Gruppen auf der Oberfläche des Siliziumdioxids zum Ruthenium-Carben-Komplex mindestens 5 beträgt,
und wobei die chemische Reaktion in einem kontinuierlich betriebenen Reaktor durchgeführt wird.

2. Verfahren gemäß Anspruch 1, wobei das Verhältnis von OH-Gruppen zur $N_2$-BET-Oberfläche auf der Oberfläche des eingesetzten Siliziumdioxides durch thermische Behandlung des Siliziumdioxides eingestellt wird.

3. Verwendung eines Trägerkatalysators wie in einem der Ansprüche 1 oder 2 definiert, der mindestens einen Ruthenium-Carben-Komplex der Formel IV

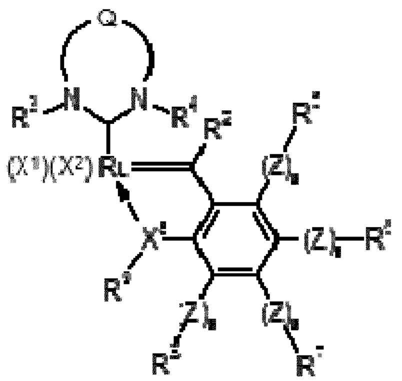

(IV)

worin

$X^1$, $X^2$ gleich oder verschieden sind, insbesondere gleich, und für jeweils einen anionischen Liganden stehen, der ausgewählt ist aus der Gruppe bestehend aus Fluor, Chlor, Brom, Iod, vorzugsweise Chlor, bevorzugt stehen $X^1$ und $X^2$ für Chlor;
Q eine zweibindige organische Gruppe mit 1 bis 40 Kohlenstoffatomen ist, die ausgewählt ist aus einer zweibindigen Kohlenwasserstoffgruppe oder einer substituierten zweibindigen Kohlenwasserstoffgruppe;
$R^2$ Wasserstoff oder einen $C_1$-$C_{40}$-kohlenstoffhaltigen Rest bedeutet;
$R^3$ Wasserstoff oder $C_7$-$C_{40}$-Arylalkyl bedeutet;
$R^4$ Wasserstoff oder $C_7$-$C_{40}$-Arylalkyl bedeutet;
$X^5$ O ist,
Z unabhängig voneinander O oder $NR^{10}$ sind,
s unabhängig voneinander 0 oder 1 sind,
R5, $R^6$, $R^7$, $R^8$, $R^9$ unabhängig voneinander gleich oder verschieden sind, und jeweils Wasserstoff oder einen $C_1$-$C_{40}$-kohlenstoffhaltigen Rest bedeuten oder im Falle von s gleich 0 auch eine funktionelle Gruppe ausgewählt aus der Gruppe der Elemente bestehend aus $NO_2$, CN, COOH, $COOR^{10}$ und Halogen ist, und
$R^{10}$ Wasserstoff oder einen $C_1$-$C_{40}$-kohlenstoffhaltigen Rest bedeutet,

als katalytisch aktive Komponente und ein Siliziumdioxid als Trägermaterial umfasst, wobei das zur Trägerkatalysatorherstellung eingesetzte Siliziumdioxid ein getrocknetes Kieselgel ist, das auf seiner Oberfläche ein Verhältnis von OH-Gruppen zur $N_2$-BET-Oberfläche ($N_2$-BET-Oberfläche bestimmt nach DIN ISO 9277:2003-05) aufweist, das im Bereich von 0,1 bis 1,2 OH-Gruppen/$nm^2$ liegt und dessen Poren einen gemittelten Durchmesser (ermittelt nach DIN ISO 66133) von 50 bis 70 Å aufweisen, wobei bei der Trägerkatalysatorherstellung der Ruthenium-Carben-Komplex in einer solchen Menge im Verhältnis zum verwendeten Siliziumdioxid eingesetzt wird, dass das molare Verhältnis der OH-Gruppen auf der Oberfläche des Siliziumdioxids zum Ruthenium-Carben-Komplex mindestens 5 beträgt, als heterogenes Katalysatorsystem zur Herstellung von Cycloalkadienen aus Cycloalkenmonomeren, Polycycloalkenylenen oder Gemischen aus beiden, wobei die chemische Reaktion in einem kontinuierlich betriebenen Reaktor durchgeführt wird.

## Claims

1. A process for preparing cycloalkadienes from cycloalkene monomers, polycycloalkenylenes or mixtures of the two in the presence of a supported catalyst comprising at least one ruthenium-carbene complex of the formula IV

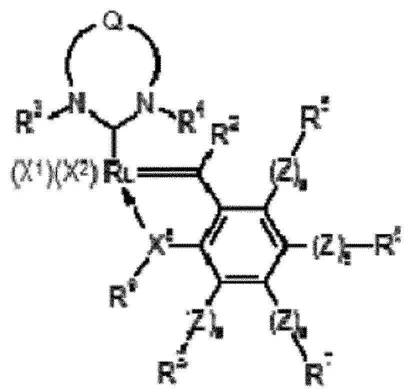

(IV)

where

$X^1$, $X^2$ are identical or different, in particular identical, and are each an anionic ligand selected from the group consisting of fluorine, chlorine, bromine, iodine, preferably chlorine, with $X^1$ and $X^2$ preferably being chlorine;
Q is a divalent organic group which has from 1 to 40 carbon atoms and is selected from among a divalent hydrocarbon group and a substituted divalent hydrocarbon group;
$R^2$ is hydrogen or a $C_1$-$C_{40}$-carbon-comprising radical;
$R^3$ is hydrogen or $C_7$-$C_{40}$-arylalkyl;
$R^4$ is hydrogen or $C_7$-$C_{40}$-arylalkyl;
$X^5$ is O,
the radicals Z are each, independently of one another, O or $NR^{10}$,
the indices s are each, independently of one another, 0 or 1
$R^5$, $R^6$, $R^7$, $R^8$, $R^9$ are, independently of one another, identical or different and are each hydrogen or a $C_1$-$C_{40}$-carbon-comprising radical or in the case of s being 0 also a functional group selected from the group consisting of $NO_2$, CN, COOH, $COOR^{10}$ and halogen, and
$R^{10}$ is hydrogen or a $C_1$-$C_{40}$-carbon-comprising radical,

as catalytically active component and a silicon dioxide as support material, wherein the silicon dioxide used for producing the supported catalyst is a dried silica gel which has a ratio of OH groups on its surface to the $N_2$ BET surface area ($N_2$ BET surface area determined according to DIN ISO 9277:2003-05) which is in the range from 0.1 to 1.2 OH groups/$nm^2$ and whose pores have an average diameter (determined according to DIN ISO 66133) of from 50 to 70 Å,
wherein, in the production of the supported catalyst, the ruthenium-carbene complex is used in such an amount relative to the silicon dioxide used that the molar ratio of OH groups on the surface of the silicon dioxide to the ruthenium-carbene complex is at least 5,
and wherein the chemical reaction is carried out in a continuously operated reactor.

2. The process according to claim 1, wherein the ratio of OH groups to the $N_2$ BET surface area on the surface of the silicon dioxide used is set by thermal treatment of the silicon dioxide.

3. The use of a supported catalyst as defined in either of claims 1 and 2, comprising at least one ruthenium-carbene complex of the formula IV

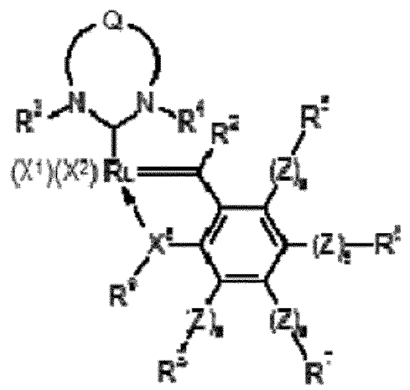

(IV)

where

$X^1$, $X^2$ are identical or different, in particular identical, and are each an anionic ligand selected from the group consisting of fluorine, chlorine, bromine, iodine, preferably chlorine, with $X^1$ and $X^2$ preferably being chlorine;
Q is a divalent organic group which has from 1 to 40 carbon atoms and is selected from among a divalent hydrocarbon group and a substituted divalent hydrocarbon group;
$R^2$ is hydrogen or a $C_1$-$C_{40}$-carbon-comprising radical;
$R^3$ is hydrogen or $C_7$-$C_{40}$-arylalkyl;
$R^4$ is hydrogen or $C_7$-$C_{40}$-arylalkyl;
$X^5$ is O,
the radicals Z are each, independently of one another, O or $NR^{10}$,
the indices s are each, independently of one another, 0 or 1
$R^5$, $R^6$, $R^7$, $R^8$, $R^9$ are, independently of one another, identical or different and are each hydrogen or a $C_1$-$C_{40}$-carbon-comprising radical or in the case of s being 0 also a functional group selected from the group consisting of $NO_2$, CN, COOH, $COOR^{10}$ and halogen, and
$R^{10}$ is hydrogen or a $C_1$-$C_{40}$-carbon-comprising radical,

as catalytically active component and a silicon dioxide as support material, wherein the silicon dioxide used for producing the supported catalyst is a dried silica gel which has a ratio of OH groups on its surface to the $N_2$ BET surface area ($N_2$ BET surface area determined according to DIN ISO 9277:2003-05) which is in the range from 0.1 to 1.2 OH groups/nm$^2$ and whose pores have an average diameter (determined according to DIN ISO 66133) of from 50 to 70 Å, wherein, in the production of the supported catalyst, the ruthenium-carbene complex is used in such an amount relative to the silicon dioxide used that the molar ratio of OH groups on the surface of the silicon dioxide to the ruthenium-carbene complex is at least 5, as heterogeneous catalyst system for preparing cycloalkadienes from cycloalkene monomers, polycycloalkenylenes or mixtures of the two, wherein the chemical reaction is carried out in a continuously operated reactor.

## Revendications

**1.** Procédé de fabrication de cycloalcadiènes à partir de monomères cycloalcène, de polycycloalcénylènes ou de mélanges des deux en présence d'un catalyseur supporté, qui comprend au moins un complexe de ruthénium-carbène de formule IV

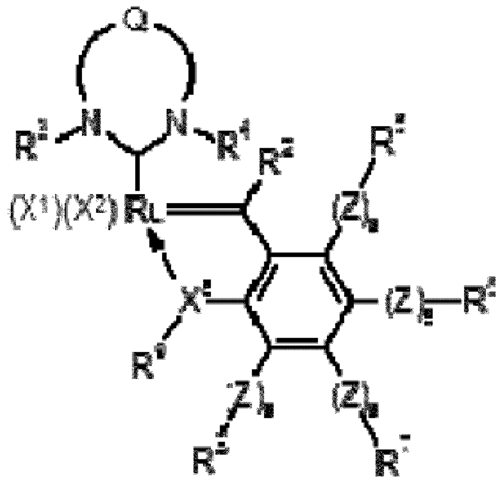

(IV)

dans laquelle

$X^1$, $X^2$ sont identiques ou différents, notamment identiques, et représentent chacun un ligand anionique, qui est choisi dans le groupe constitué par le fluor, le chlore, le brome, l'iode, de préférence le chlore, $X^1$ et $X^2$ représentant de préférence le chlore ;
Q est un groupe organique bivalent de 1 à 40 atomes de carbone, qui est choisi parmi un groupe hydrocarboné bivalent ou un groupe hydrocarboné bivalent substitué ; $R^2$ signifie l'hydrogène ou un radical carboné en $C_1$-$C_{40}$ ;
$R^3$ signifie l'hydrogène ou un arylalkyle en $C_7$-$C_{40}$ ;
$R^4$ signifie l'hydrogène ou un arylalkyle en $C_7$-$C_{40}$ ;
$X^5$ signifie O ;
les Z signifient indépendamment les uns des autres O ou $NR^{10}$,
les s signifient indépendamment les uns des autres 0 ou 1,
$R^5$, $R^6$, $R^7$, $R^8$, $R^9$ sont indépendamment les uns des autres identiques ou différents, et signifient chacun l'hydrogène ou un radical carboné en $C_1$-$C_{40}$ ou, lorsque s signifie 0, également un groupe fonctionnel choisi dans le groupe des éléments constitué par $NO_2$, CN, COOH, $COOR^{10}$ et halogène, et
$R^{10}$ signifie l'hydrogène ou un radical carboné en $C_1$-$C_{40}$,
en tant que composant catalytiquement actif et un dioxyde de silicium en tant que matériau support, le dioxyde de silicium utilisé pour la fabrication du catalyseur supporté étant un gel de silice séché qui présente sur sa surface un rapport entre les groupes OH et la surface BET $N_2$ (surface BET $N_2$ déterminée selon DIN ISO 9277:2003-05) qui se situe dans la plage allant de 0,1 à 1,2 groupe OH/$nm^2$, et dont les pores présentent un diamètre moyen (déterminé selon DIN ISO 66133) de 50 à 70 Å,
lors de la fabrication du catalyseur supporté, le complexe de ruthénium-carbène étant utilisé en une quantité telle par rapport au dioxyde de silicium utilisé que le rapport molaire entre les groupes OH sur la surface du dioxyde de silicium et le complexe de ruthénium-carbène soit d'au moins 5,
et la réaction chimique étant réalisée dans un réacteur exploité en continu.

2. Procédé selon la revendication 1, dans lequel le rapport entre les groupes OH et la surface BET $N_2$ sur la surface du dioxyde de silicium utilisé est ajusté par traitement thermique du dioxyde de silicium.

3. Utilisation d'un catalyseur supporté tel que défini dans l'une quelconque des revendications 1 ou 2, qui comprend au moins un complexe de ruthénium-carbène de formule IV

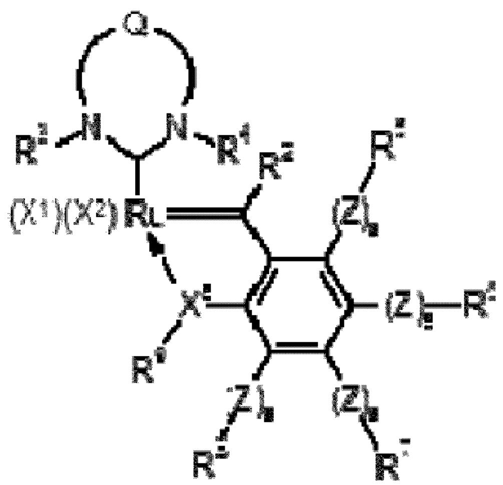

(IV)

dans laquelle

$X^1$, $X^2$ sont identiques ou différents, notamment identiques, et représentent chacun un ligand anionique, qui est choisi dans le groupe constitué par le fluor, le chlore, le brome, l'iode, de préférence le chlore, $X^1$ et $X^2$ représentant de préférence le chlore ;

Q est un groupe organique bivalent de 1 à 40 atomes de carbone, qui est choisi parmi un groupe hydrocarboné bivalent ou un groupe hydrocarboné bivalent substitué ; $R^2$ signifie l'hydrogène ou un radical carboné en $C_1$-$C_{40}$ ;

$R^3$ signifie l'hydrogène ou un arylalkyle en $C_7$-$C_{40}$ ;

$R^4$ signifie l'hydrogène ou un arylalkyle en $C_7$-$C_{40}$ ;

$X^5$ signifie O ;

les Z signifient indépendamment les uns des autres O ou $NR^{10}$,

les s signifient indépendamment les uns des autres 0 ou 1,

$R^5$, $R^6$, $R^7$, $R^8$, $R^9$ sont indépendamment les uns des autres identiques ou différents, et signifient chacun l'hydrogène ou un radical carboné en $C_1$-$C_{40}$ ou, lorsque s signifie 0, également un groupe fonctionnel choisi dans le groupe des éléments constitué par $NO_2$, CN, COOH, $COOR^{10}$ et halogène, et

$R^{10}$ signifie l'hydrogène ou un radical carboné en $C_1$-$C_{40}$,

en tant que composant catalytiquement actif et un dioxyde de silicium en tant que matériau support, le dioxyde de silicium utilisé pour la fabrication du catalyseur supporté étant un gel de silice séché qui présente sur sa surface un rapport entre les groupes OH et la surface BET $N_2$ (surface BET $N_2$ déterminée selon DIN ISO 9277:2003-05) qui se situe dans la plage allant de 0,1 à 1,2 groupe OH/nm$^2$, et dont les pores présentent un diamètre moyen (déterminé selon DIN ISO 66133) de 50 à 70 Å, lors de la fabrication du catalyseur supporté, le complexe de ruthénium-carbène étant utilisé en une quantité telle par rapport au dioxyde de silicium utilisé que le rapport molaire entre les groupes OH sur la surface du dioxyde de silicium et le complexe de ruthénium-carbène soit d'au moins 5, en tant que système catalytique hétérogène pour la fabrication de cycloalcadiènes à partir de monomères cycloalcène, de polycycloalcénylènes ou de mélanges des deux, la réaction chimique étant réalisée dans un réacteur exploité en continu.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1288181 A
- US 6921735 B
- WO 2007065907 A1
- WO 2010021740 A


### In der Beschreibung aufgeführte Nicht-Patentliteratur


- **Y.CHAUVIN ; R. R. SCHROCK ; R. H. GRUBBS.** *Verleihung des Nobelpreises für Chemie,* 2005
- **SELS et al.** *Adv. Synth. Catal.,* 2008, vol. 350, 1949-1953
- **D. TRONG et al.** *Applied Catalysis A: General,* 2003, vol. 253, 545-602
- **ALCAIDE, B. ; ALMENDROS, P ; LUNA, A.** *Chem. Rev.,* 2009, vol. 109, 3817-3858
- **IVIN, K.J. ; MOL, J.C.** Olefin Metathesis and Metathesis Polymerization. Academic Press, 1997
- **GRUBBS, R.H.** Handbook of Metathesis. Wiley VCH, 2003
- *Adv. Synth. Catal.,* 2008, vol. 350, 1949-1953
- **B. E. FITZNER ; W. FRITZ ; E. KLEMM.** Technische Chemie: Einführung in die chemische Reaktionstechnik. Springer, 2005
- **V. MYNEN ; P. COOL ; E. F. VANSANT.** Verified syntheses of mesoporous materials. *Micropor. Mesopor. Mater.,* 2009, vol. 125, 170-223